# FASCICULE DE BREVET EUROPEEN

(11) **EP 3 625 501 B1**
(45) Date de publication et mention de la délivrance du brevet: **21.12.2022**
(21) Numéro de dépôt: 18722640.2
(22) Date de dépôt: 15.05.2018
(51) Int. Cl.: F21S 41/30, F21V 8/00, F21S 43/245

(54) **FEU DE SIGNALISATION POUR VEHICULE AUTOMOBILE**
SIGNALLICHT FÜR EIN KRAFTFAHRZEUG
SIGNAL LIGHT FOR A MOTOR VEHICLE

(30) Priorité: 15.05.2017 FR 1754266
(43) Date de publication de la demande: 25.03.2020
(73) Titulaire: Marelli Automotive Lighting France, 89330 Saint-Julien-du-Sault (FR)
(72) Inventeur: BUISSON, Alain, 78320 Le Mesnil-Saint-Denis (FR); PROVOT, Erwan, 78190 Trappes (FR); PATTERSON, Sean, 78190 Trappes (FR)
(74) Mandataire: Jacobacci Coralis Harle
(86) Numéro de dépôt international: PCT/EP2018/062622
(87) Numéro de publication internationale: WO 2018/210881

(56) Documents cités:
- EP-A1- 2 541 291
- WO-A1-2017/017869
- FR-A1- 3 033 191
- JP-A- 2001 105 966
- JP-A- 2004 196 201
- US-A1- 2012 327 680
- US-A1- 2013 322 110
- US-A1- 2014 104 877

## Description

### Domaine technique

La présente invention concerne le domaine technique des feux de signalisation pour véhicules automobiles, comprenant un guide de lumière éclairé de façon sensiblement homogène.

### État de la technique

La réglementation en vigueur impose différents feux d'éclairage ou de signalisation selon le type de véhicule automobile. Mais, outre le volume de l'ensemble des feux, les performances et l'uniformité d'éclairement des feux individuels ainsi regroupés sont des préoccupations majeures.

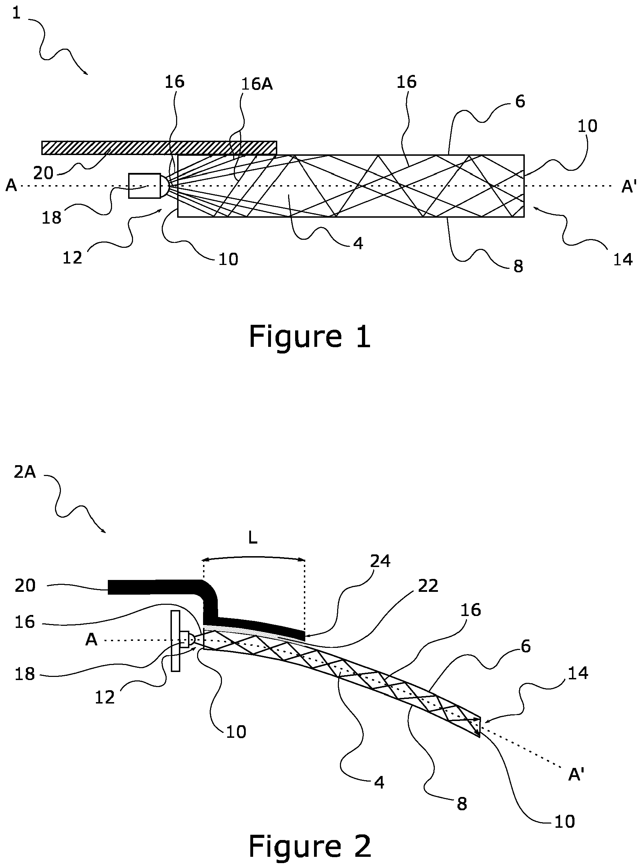

On connaît de l'art antérieur des dispositifs d'éclairage permettant d'éclairer de façon plus ou moins uniforme un écran de faible épaisseur, permettant d'afficher un signal lumineux indiquant le positionnement ou un changement de direction d'un véhicule. La figure 1 illustre un exemple de ce type de dispositif d'éclairage 1, comprenant un guide de lumière 4 délimité par une face avant 6 parallèle à une face arrière 8. Les faces avant et arrière sont délimitées par des faces latérales 10 reliant lesdites faces. Le guide de lumière 4 forme ainsi un écran sensiblement plan, s'étendant selon une direction longitudinale (AA'), entre une première extrémité 12 et une seconde extrémité 14. Le guide de lumière 2 est transparent pour permettre la propagation de faisceaux lumineux 16, émis par une diode électroluminescente 18, entre sa première et seconde extrémité. Plus précisément, la diode électroluminescente 18 est positionnée au niveau de la première extrémité 12 du guide de lumière pour éclairer sa face latérale 10.

Afin de donner une impression d'éclairement sensiblement homogène le long du guide de lumière 4, un cache 20 est positionné devant la diode électroluminescente 18 et contre une partie de la face avant 6 du guide de lumière 4. Le cache modifie localement les propriétés de réflexion de la face avant 6, favorisant un découplage et/ou une absorption des faisceaux lumineux 16A se propageant dans le guide de lumière 4. De ce fait, une partie des faisceaux lumineux 16A émis par la diode électroluminescente 18 est perdue au niveau du cache 20, ce qui a pour effet de diminuer l'intensité du signal lumineux se propageant dans le guide de lumière 4.

Selon une alternative divulguée par le document EP2541291A1, le cache peut être positionné à distance du guide de lumière afin de prévenir d'une perte d'intensité du faisceau lumineux par un phénomène de découplage mentionné ci-dessus.

La présente invention a pour objet de résoudre ce problème, en proposant un dispositif d'éclairage pour un feu de signalisation pour un véhicule automobile, comprenant un guide de lumière éclairé de façon sensiblement homogène le long du guide, tout en favorisant la propagation d'une plus grande quantité de lumière dans le guide.

### Description de l'invention

Afin d'atteindre cet objectif l'invention propose un feu de signalisation de véhicule automobile comprenant un dispositif d'éclairage comprenant, un guide de lumière délimité par une face avant, une source de lumière éclairant une première extrémité du guide de lumière ainsi qu'un premier cache positionné devant la source de lumière et une partie de la face avant du guide de lumière, de sorte que le premier cache dissimule la source de lumière à un observateur regardant la face avant du guide de lumière. Autrement dit, dans le cas présent l'observateur fait face à la face avant du guide de lumière.

L'invention se caractérise en ce que la face avant du guide de lumière, en vis-à-vis du premier cache, est au moins partiellement recouverte par une couche intercalaire réfléchissant la lumière émise par la source de lumière et la couche intercalaire est en retrait de l'extrémité du premier cache qui recouvre la face avant du guide de lumière.

La couche intercalaire interposée entre le guide de lumière et le premier cache permet de réfléchir la lumière émise par la source de lumière et, ainsi, de limiter les phénomènes de découplage de la lumière qui se propage dans le guide de lumière au niveau du premier cache. De ce fait, la couche intercalaire favorise la propagation d'une plus grande quantité de lumière dans le guide. De préférence, la couche intercalaire réfléchit totalement la lumière émise par la source de lumière afin d'optimiser la quantité de lumière se propageant dans le guide de lumière.

Selon un autre avantage, la couche intercalaire est en retrait de l'extrémité du premier cache afin que la couche intercalaire ne soit pas apparente au niveau de l'extrémité du premier cache recouvrant la face avant du guide de lumière. Selon un autre avantage, cela permet également d'atténuer l'impression de point chaud au niveau d'un bord de la couche intercalaire. Par « point chaud », on entend ici une zone du guide de lumière éclairée plus intensément par la source de lumière. La valeur de ce retrait est comprise entre quelques millimètres et quelques dizaines de millimètres, de préférence entre 5mm et 15mm, ou entre 5mm et 10mm, de préférence de l'ordre de 6mm.

Selon un autre mode de réalisation de l'invention, la couche intercalaire recouvre entre 70% et 90% de la face avant du guide de lumière dissimulée derrière le premier cache.

Selon un autre mode de réalisation de l'invention, la couche intercalaire recouvre l'extrémité de la face avant du guide de lumière dissimulée derrière le premier cache. L'extrémité de la face avant correspond à la première extrémité du guide de lumière. Autrement dit, la couche intercalaire s'étend jusqu'au bord de la face latérale délimitant la première extrémité du guide de lumière.

Selon un autre mode de réalisation de l'invention, l'extrémité du premier cache est recourbée en direction de la face avant du guide de lumière, de sorte à dissimuler complètement la couche intercalaire à un observateur. De préférence, l'extrémité du premier cache est en contact avec la face avant du guide de lumière afin de former en coopération avec ladite face avant, un logement protégeant le film intercalaire de l'humidité et de la poussière.

Selon un autre mode de réalisation de l'invention, l'épaisseur de la couche intercalaire est inférieure à 5mm, de préférence inférieure à 1mm.

Selon un autre mode de réalisation de l'invention, la couche intercalaire est en contact avec le premier cache. Ce mode de réalisation permet avantageusement de minimiser l'épaisseur du dispositif d'éclairage.

Selon un autre mode de réalisation de l'invention, la couche intercalaire est formée à partir d'un matériau métallique de type aluminium, argent ou chrome.

Selon un autre mode de réalisation de l'invention, le guide de lumière est réalisé à partir d'un matériau d'aspect transparent ou translucide, de manière à favoriser une propagation de la lumière à travers tout le guide de lumière. À titre d'exemple, le guide de lumière peut être réalisé à partir de l'un des matériaux suivants : Polyméthacrylate de méthyle (PMMA) et/ou Polycarbonate (PC). Bien entendu, ces exemples ne sont pas exhaustifs.

Selon un autre mode de réalisation de l'invention, la source de lumière comprend au moins une diode électroluminescente. Selon un mode de réalisation préféré, la source de lumière comporte plusieurs diodes électroluminescentes de couleurs différentes afin d'afficher des informations lumineuses de différentes couleurs au niveau du guide de lumière. À titre d'exemple, la source de lumière peut être configurée pour éclairer le guide de lumière par une couleur ambre afin de signaler un changement de direction d'un véhicule automobile muni d'un dispositif d'éclairage selon l'invention, et/ou par une couleur blanche afin de signaler le recul dudit véhicule et/ou par une couleur rouge afin de signaler son positionnement et/ou son freinage.

Selon un autre mode de réalisation de l'invention, le dispositif d'éclairage comporte une autre source de lumière éclairant une autre extrémité du guide de lumière, de préférence une seconde extrémité du guide de lumière en vis-à-vis de sa première extrémité. Ce mode de réalisation permet avantageusement d'éclairer de façon plus homogène un guide de lumière de plus grandes dimensions.

Selon un mode de réalisation préféré, le guide de lumière comporte au niveau d'une deuxième extrémité, une rainure accueillant un deuxième cache de sorte que celui-ci affleure la face avant du guide de lumière. Le deuxième cache permet de limiter l'impression de point chaud à la seconde extrémité du guide de lumière. Ce mode de réalisation permet également de former une surface unie au niveau de la face avant du guide de lumière et du deuxième cache. Cela offre un plus bel effet esthétique. Selon un autre avantage, l'alignement entre les faces avant du guide de lumière et du deuxième cache forme une même face ne comportant pas de protubérance susceptible de retenir la saleté. Le dispositif d'éclairage est ainsi plus simple d'entretien. Selon un autre avantage, l'absence de protubérance au niveau de cette même face limite le risque de blessure en cas de collision entre un piéton et un véhicule automobile muni d'un tel dispositif d'éclairage.

Selon un autre mode de réalisation, la face avant du guide de lumière, en vis-à-vis du deuxième cache, est au moins partiellement recouverte par une autre couche intercalaire réfléchissant la lumière émise par l'autre source de lumière. Les différentes variantes de réalisation mentionnées ci-dessus concernant la couche intercalaire en vis-à-vis du premier cache sont transposables à l'autre couche intercalaire.

Selon un autre mode de réalisation de l'invention, le guide de lumière comprend des moyens de diffraction de la lumière se propageant dans le guide de lumière. Les moyens de diffractions sont configurés pour réfléchir la lumière dans au moins une direction sensiblement normale à l'axe longitudinal (AA') du guide de lumière. Les moyens de diffraction sont notamment présents au niveau de la partie du guide de lumière qui n'est pas recouverte par le premier cache et/ou le deuxième cache, afin que la lumière diffractée par lesdits moyens soit plus facilement visible par un observateur regardant la face avant du guide de lumière.

Selon un mode de réalisation préféré, le premier cache et/ou le deuxième cache recouvre un ou plusieurs moyens de diffraction. Ce mode de réalisation permet avantageusement à l'observateur de mieux percevoir la lumière au-delà du premier cache ou du deuxième cache, lorsqu'il incline son angle de vision pour observer derrière ledit cache. À titre d'exemple, un premier moyen de diffraction peut être en retrait du premier cache et/ou du deuxième cache, en étant positionné à une distance d'une extrémité dudit cache recouvrant le guide de lumière, comprise entre 5mm et 15mm, de préférence de l'ordre de 10mm. Bien entendu, ces valeurs sont adaptables en fonction de la puissance de la source de lumière, de la longueur dudit cache et de l'épaisseur du guide de lumière.

Selon un mode de réalisation préféré de l'invention, les moyens de diffraction forment des cavités ménagées dans une face arrière du guide de lumière, la face arrière étant opposée à la face avant du guide de lumière. Selon un mode de réalisation alternatif, la face arrière est grainée.

Selon un autre mode de réalisation de l'invention, le guide de lumière forme au moins une concavité et/ou une convexité, de manière à former au niveau de sa face avant une surface en trois dimensions. Ce mode de réalisation permet une plus grande adaptabilité du dispositif d'éclairage à la forme d'un boîtier optique et/ou aux contours de la carrosserie d'un véhicule automobile muni d'un feu de signalisation selon l'invention.

Les différentes caractéristiques, variantes et formes de réalisation mentionnées ci-dessus peuvent être associées les unes aux autres selon diverses combinaisons, dans la mesure où elles ne sont pas incompatibles ou exclusives les unes des autres.

La présente demande porte également sur un procédé de réalisation d'un dispositif d'éclairage décrit ci-dessus, mettant en œuvre une étape de surmoulage de la couche intercalaire sur une partie de la face avant du guide de lumière, puis une étape de fixation du premier cache sur au moins une partie de la couche intercalaire. À titre d'exemple non limitatif, le premier cache peut être collé sur la couche intercalaire à l'aide de moyens connus. Selon une alternative, un feu de signalisation selon l'invention est réalisé lors d'une première étape d'application de la couche intercalaire contre une face du premier cache, puis à l'aide de moyens connus le premier cache est maintenu en vis-à-vis de la face avant du guide de lumière, de sorte que la couche intercalaire soit en contact avec ladite face avant. Selon une variante de réalisation, un procédé de réalisation d'un dispositif d'éclairage décrit ci-dessus, met en œuvre une étape de surmoulage de la couche intercalaire sur une partie de la face avant du guide de lumière, de sorte à former le premier cache. De façon avantageuse, les techniques de surmoulage mentionnées ci-dessus, permettent de protéger la couche intercalaire de l'environnement extérieur, au niveau de la face avant du guide de lumière.

Le guide de lumière du dispositif d'éclairage peut former un écran intermédiaire du feu de signalisation.

De préférence, le guide de lumière forme un écran externe du feu de signalisation. Par les termes « écran externe », on entend le fait que le guide de lumière ferme une partie d'un boîtier optique accueillant le dispositif d'éclairage, de sorte à protéger de l'environnement extérieur les composants présents dans le boîtier optique. De façon avantageuse, le guide de lumière assure alors simultanément les deux fonctions suivantes : la protection des composants présents dans le boîtier optique et l'affichage d'un signal lumineux au niveau du guide de lumière, visant à avertir un observateur de la position et/ou du changement de direction d'un véhicule automobile muni d'un feu de signalisation selon l'invention. Il n'est alors plus nécessaire de recourir à un écran de protection spécifique ce qui permet avantageusement de se passer d'un tel écran pour réduire la profondeur du feu de signalisation mais également d'alléger le poids du feu de signalisation. Par le terme « profondeur », on entend une dimension du feu de signalisation selon une direction sensiblement normale à la face avant du guide de lumière. À titre d'exemple, la profondeur d'un feu de signalisation selon l'invention peut ainsi être égale ou inférieure à 50mm ou à 15mm, de préférence égale ou inférieure à 9mm.

Un feu de signalisation de faible profondeur comme le propose l'invention permet une meilleure adaptabilité sur une plus grande variété de carrosseries en raison de son plus faible encombrement. À ce titre, un feu de signalisation selon l'invention peut être positionné à l'avant et/ou sur un côté et/ou à l'arrière d'un véhicule automobile. De ce fait, l'invention porte également sur un véhicule automobile comprenant un feu de signalisation tel que décrit ci-dessus.

### Description des figures

L'invention sera mieux comprise, grâce à la description ci-après, qui se rapporte à des modes de réalisations préférés, donnés à titre d'exemples non limitatifs, et expliqués en référence aux dessins schématiques annexés, dans lesquels :
- la figure 1 est une représentation schématique d'une vue en coupe longitudinale d'un dispositif d'éclairage selon l'état de la technique ;
- la figure 2 est une représentation schématique d'une vue en coupe longitudinale d'un mode de réalisation d'un dispositif d'éclairage qui ne forme pas partie de l'invention ;
- la figure 3 est une représentation schématique d'une vue en coupe longitudinale d'un mode de réalisation d'un dispositif d'éclairage d'un feu de signalisation d'un véhicule automobile selon l'invention;
- la figure 4 est une représentation schématique d'une vue en coupe longitudinale d'un mode de réalisation d'un dispositif d'éclairage qui ne forme pas partie de l'invention ;
- la figure 5 est une représentation schématique d'une vue en coupe longitudinale d'un mode de réalisation d'un dispositif d'éclairage qui ne forme pas partie de l'invention ;
- la figure 6 est une représentation schématique d'une vue en coupe longitudinale d'un mode de réalisation d'un dispositif d'éclairage qui ne forme pas partie de l'invention ;
- la figure 7 est une représentation schématique d'une vue en coupe longitudinale d'un mode de réalisation d'un dispositif d'éclairage qui ne forme pas partie de l'invention ;
- la figure 8 est une représentation schématique d'une vue en coupe longitudinale d'un feu de signalisation comprenant un dispositif d'éclairage selon la figure 7 ;
- la figure 9 est une vue frontale de la face avant d'un feu de signalisation selon la figure 8.

### Description de modes de réalisation détaillés de l'invention

Pour rappel, l'invention propose un feu de signalisation pour un véhicule automobile, comprenant un dispositif d'éclairage comprenant un guide de lumière éclairé de façon sensiblement homogène le long du guide, tout en favorisant la propagation d'une plus grande quantité de lumière dans le guide.

Selon un mode de réalisation illustré à la figure 2, un dispositif d'éclairage 2A qui ne forme pas partie de l'invention se distingue du dispositif d'éclairage 1 décrit ci-dessus, en ce que le guide de lumière 4 est sensiblement convexe au niveau de sa face avant 6 et qu'il comprend une couche intercalaire 22 interposée entre la face avant 6 et le premier cache 20. Il est à noter que les éléments identiques entre ces deux dispositifs d'éclairage 1 et 2A sont indexés par les mêmes références numériques.

Plus précisément, la couche intercalaire 22 est en contact avec la face avant 6 du guide de lumière et le premier cache 20. La couche intercalaire 22 est au moins partiellement réfléchissante, de préférence totalement réfléchissante, aux faisceaux lumineux 16 émis par la diode électroluminescente 18. Ainsi, de façon avantageuse, une plus grande quantité de lumière émise par la diode électroluminescente 18 se propage dans le guide de lumière 4. De ce fait, le guide de lumière 4 est perçu comme plus lumineux par un observateur regardant la face avant 6 du guide de lumière, en comparaison avec le guide de lumière 1 décrit ci-dessus.

À titre d'exemple non limitatif, la couche intercalaire 22 est réalisée à partir d'aluminium. La couche intercalaire 22 s'étend de la première extrémité 12 du guide de lumière 4, dissimulée par le premier cache 20, jusqu'à une extrémité 24 du premier cache dissimulant une partie de la face avant 6 du guide de lumière 4. Autrement dit, la couche intercalaire 22 s'étend sur 100% ou toute la longueur L du premier cache 20 qui dissimule la face avant 6 du guide de lumière 4.

De préférence, la couche intercalaire 22 est la plus fine possible afin d'optimiser l'épaisseur totale du dispositif d'éclairage 2A. Bien entendu, la couche intercalaire est également d'épaisseur suffisante pour permettre de réfléchir la majorité des faisceaux lumineux 16 se propageant dans le guide de lumière 4. Par exemple, en fonction de la nature de la couche intercalaire, son épaisseur est comprise entre 0,1mm et 2mm, de préférence de l'ordre de 1mm.

Selon le présent exemple, le guide de lumière 4 comprend un point d'inflexion de manière à former une paroi en trois dimensions dont l'épaisseur, définie comme la distance séparant sa face avant 6 de sa face arrière 8, est comprise entre 1mm et 50mm, de préférence de l'ordre de 25mm. Bien entendu, selon des modes de réalisation de l'invention non représentés, le guide de lumière peut être concave et/ou convexe.

Le guide de lumière 4 est transparent afin de permettre la propagation des faisceaux lumineux 16 le long dudit guide. De préférence, la valeur mesurée de « HAZE » au niveau de la face avant du guide de lumière est comprise entre 60% et 98%, de préférence supérieure à 70%. À titre d'exemple non limitatif, le guide de lumière 4 est formé à partir d'un Polyméthacrylate de méthyle (PMMA) et/ou d'un Polycarbonate (PC).

Le premier cache 20 est également réalisé à partir de l'un des matériaux mentionnés ci-dessus, et traité de manière à être opaque aux faisceaux lumineux 16. En pratique, le guide de lumière 4 peut avoir une longueur, définie selon l'axe (AA'), d'environ 200mm à 300mm lorsqu'il est éclairé par une diode électroluminescente au niveau de sa première extrémité 12, et même jusqu'à environ 600mm lorsqu'une autre diode électroluminescente éclaire sa seconde extrémité 14 (non représentée sur les figures).

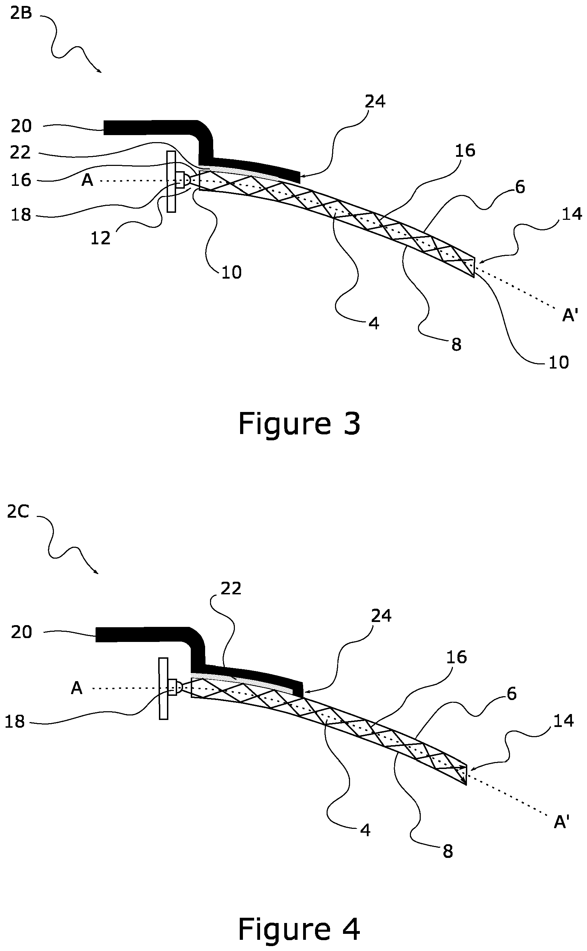

La figure 3 illustre à présent un mode de réalisation d'un dispositif d'éclairage 2B d'un feu de signalisation pour véhicule automobile selon l'invention. Ce mode de réalisation se distingue de l'exemple décrit ci-dessus en ce que la couche intercalaire 22 est en retrait de l'extrémité 24 du premier cache 20, de manière à ce que la couche intercalaire 22 soit difficilement observable par un observateur faisant face à la face avant 6. De préférence, l'extrémité 24 du premier cache 20 dépasse le film intercalaire 22 d'une longueur adaptée afin de réduire l'impression de point chaud observable au bord de la couche intercalaire 22. Par « point chaud », on entend ici une zone du guide de lumière 4 localement plus éclairée au niveau de sa face avant 6 par la source de lumière 18. Selon le présent exemple, l'extrémité 24 du premier cache dépasse la couche intercalaire d'une longueur comprise entre 5mm et 15mm, de préférence de l'ordre de 10mm. Bien entendu, cette valeur est susceptible d'évoluer en fonction de l'épaisseur de la couche intercalaire et de la puissance de la source de lumière.

La figure 4 illustre un mode de réalisation d'un dispositif d'éclairage 2C qui ne forme pas partie de l'invention. Ce mode de réalisation se distingue de l'exemple décrit ci-dessus en ce que l'extrémité 24 du premier cache 20 recouvre une partie de la face avant 6 du guide de lumière 4, de manière à dissimuler complètement la couche intercalaire 22 à un observateur faisant face à la face avant 6. De préférence, l'extrémité 24 est en contact direct avec la face avant 6 du guide de lumière 4, de sorte que le premier cache 20 et le guide de lumière forment un logement protégeant le film intercalaire 22 notamment de l'humidité et de la poussière. Selon un mode de réalisation préféré, l'extrémité 24 du premier cache 20 s'étend sur une longueur comprise entre 5mm et 6mm sur la face avant 6, afin de réduire l'impression de point chaud décrit ci-dessus.

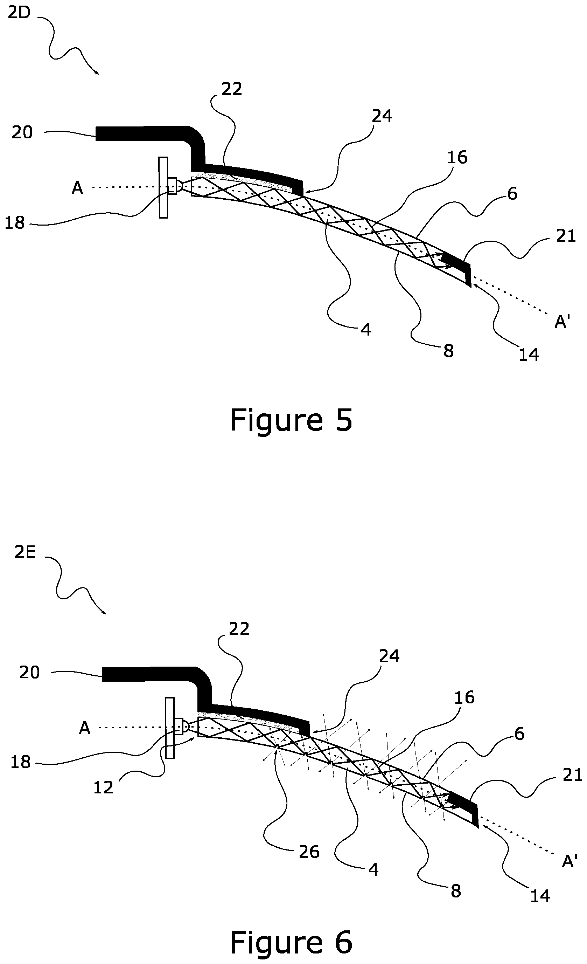

La figure 5 illustre un mode de réalisation d'un dispositif d'éclairage 2D qui ne forme pas partie de l'invention. Ce quatrième exemple se distingue de l'exemple précédent en ce que le guide de lumière 4 comporte une rainure débouchant à la fois sur une partie de la face latérale 10 délimitant sa seconde extrémité 14 et sur une partie de sa face avant 6. La rainure est configurée pour accueillir un deuxième cache 21 affleurant la face avant 6. Comme le premier cache 20, la présence du deuxième cache 21 vise à atténuer la sensation de point chaud au niveau de l'extrémité du guide de lumière. De préférence, ce deuxième cache est moulé dans ladite rainure. De préférence, le premier et le deuxième cache sont moulés en même temps sur le guide de lumière 4.

La figure 6 illustre un mode de réalisation d'un dispositif d'éclairage 2E qui ne forme pas partie de l'invention, dans lequel le guide de lumière 4 comporte au niveau de sa face arrière 8 des cavités 26 de forme conique. Chaque cavité 26 est configurée pour diffuser une partie des faisceaux lumineux 16 se propageant entre la première extrémité 12 et la seconde extrémité 14 du guide de lumière 4, afin d'uniformiser le rendu lumineux du guide de lumière pour un observateur et de supprimer également les irrégularités de diffusion.

De préférence, quelques cavités 26 sont agencées en vis-à-vis du premier cache 20 afin de préserver à la fois une propagation optimale des faisceaux lumineux 16 dans le guide de lumière 4 au niveau du premier cache 20, tout en permettant à un observateur de mieux percevoir la lumière au-delà du premier cache lorsqu'il incline son angle de vision pour observer derrière ledit cache. De préférence, la plus petite distance séparant une cavité 26 de la première extrémité 12 du guide de lumière est comprise entre 5mm et 20mm, de préférence de l'ordre de 10mm. Bien entendu, comme le premier cache 20, le deuxième cache 21 peut également recouvrir quelques cavités 26 pour les mêmes raisons.

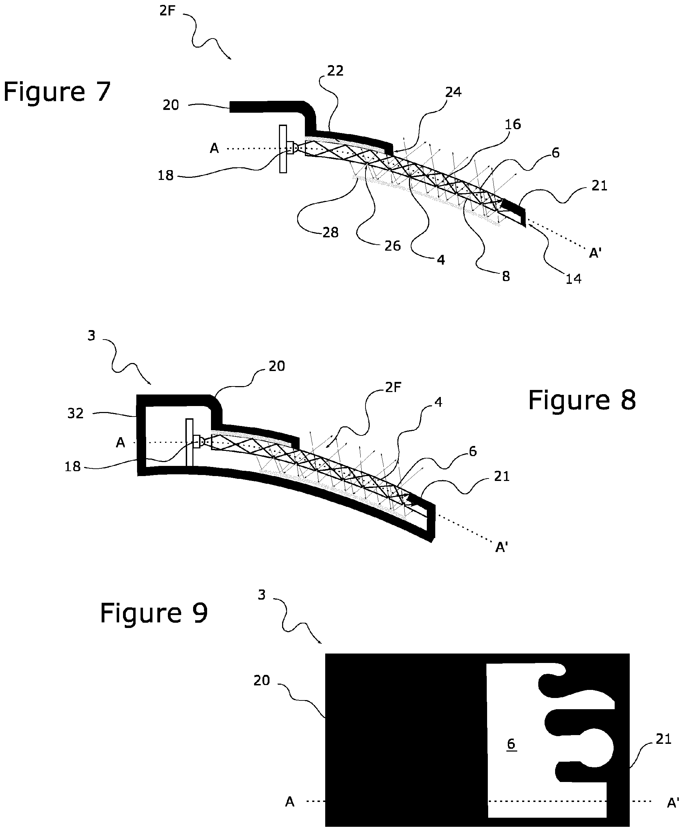

La figure 7 illustre un mode de réalisation d'un dispositif d'éclairage 2F qui ne forme pas partie de l'invention. Ce nouveau mode de réalisation se distingue du cinquième en ce que le dispositif d'éclairage 2F comporte à présent une plaque 28 recouverte d'une couche réfléchissante. La couche réfléchissante est placée en vis-à-vis de la face arrière 8 du guide de lumière 4. Plus précisément, la couche réfléchissante est configurée pour réfléchir la lumière diffusée par le guide de lumière 4, en direction de sa face avant 6. À titre d'exemple non limitatif, la couche réfléchissante recouvrant la plaque 28 peut être de même nature que la couche intercalaire 22, c'est-à-dire de surface lisse et métallisée. Cela permet avantageusement de donner un effet dynamique aux cavités 26, en donnant comme illusion optique pour un observateur de la face avant 6 du guide de lumière 4, que les cavités 26 se déplacent lorsque l'observateur change son angle d'observation de ladite face avant 6. À l'inverse, la couche réfléchissante recouvrant la plaque 28 peut être grainée à sa surface, afin d'uniformiser la lumière se réfléchissant dessus et ainsi accentuer l'impression d'un bandeau de lumière homogène émis par le guide de lumière 4.

Selon une variante de réalisation, le guide de lumière 4 est incolore et la couche réfléchissante recouvrant la plaque 28 est brillante pour favoriser la réflexion d'une plus grande quantité de lumière. Selon un mode de réalisation préféré, la couche réfléchissante est de couleur similaire à la carrosserie d'un véhicule automobile muni du dispositif d'éclairage. Ainsi, en l'absence d'émission d'un signal lumineux par la source de lumière, le guide de lumière permet à la lumière extérieure de se réfléchir sur la couche réfléchissante pour donner une impression d'homogénéité de la carrosserie. Ce mode de réalisation offre ainsi une intégration plus esthétique du dispositif d'éclairage sur la carrosserie.

Selon une autre variante de réalisation de l'invention non représentée, la source de lumière est commandée par un dispositif d'allumage permettant de faire varier progressivement l'intensité et/ou la couleur de la lumière émise par ladite source, de sorte à créer un effet d'allumage progressif du guide de lumière 4.

Les dispositifs d'éclairage décrits ci-dessus sont de préférence destinés à équiper un feu de signalisation ou une lanterne pour un véhicule automobile, par exemple un élément additionnel du feu de signalisation et/ou de positionnement. À titre d'exemple, le sixième mode de réalisation décrit ci-dessus peut être intégré dans un boîtier optique 32 pour former un feu de signalisation 3 illustré aux figures 8 et 9. De façon avantageuse, le guide de lumière 4 forme un écran externe du feu de signalisation 3. Le guide de lumière assure alors simultanément les deux fonctions suivantes : la protection des composants présents dans le boîtier optique 32 et l'affichage d'un signal lumineux au niveau du guide de lumière, visant à avertir un observateur de la position et/ou du changement de direction d'un véhicule automobile muni d'un feu de signalisation selon l'invention. Il n'est alors plus nécessaire de recourir à un écran de protection spécifique ce qui permet avantageusement de se passer d'un tel écran pour réduire la profondeur et le poids du feu de signalisation. À titre d'exemple, la profondeur d'un feu de signalisation selon l'invention peut ainsi être égale ou inférieure à 50mm ou à 15mm, de préférence égale ou inférieure à 9mm. Un feu de signalisation de faible profondeur comme le propose l'invention permet une meilleure adaptabilité sur une plus grande variété de carrosseries en raison de son plus faible encombrement. Selon un autre avantage, le premier cache 20 et le deuxième cache 21 forment un cadre comme illustré sur la figure 9, de préférence surmoulé sur la face avant 6 du guide de lumière, de manière à délimiter une fenêtre dont les contours peuvent être de formes variées afin de personnaliser le bandeau de lumière émis par le dispositif d'éclairage.

Comme mentionné précédemment, la présente demande porte également sur un procédé de réalisation d'un dispositif d'éclairage décrit ci-dessus. Selon un exemple non limitatif, le procédé de réalisation met en œuvre une première étape de moulage du guide de lumière 4, dans un moule conçu à cet effet, par une technique d'injection de matière plastique à chaud. La matière plastique utilisée est, par exemple, du Polyméthacrylate de méthyle (PMMA) et/ou d'un Polycarbonate (PC). Comme illustré par la figure 4, le guide de lumière est délimité au niveau de ses plus grandes faces, par une face avant 6 opposée à une face arrière 8. Selon le présent exemple, la surface délimitée par la face avant 6 est comprise entre quelques cm² et quelques m². L'épaisseur du guide de lumière 4 est comprise dans les plages de valeurs mentionnées ci-dessus. Le guide de lumière 4 est réalisé de sorte à former une paroi en trois dimensions, pouvant servir d'écran externe à un boîtier optique.

Ensuite, lors d'une deuxième étape, une couche intercalaire 22 telle que décrite ci-dessus, est appliquée contre une partie de la face avant 6 du guide de lumière 4, située au niveau de sa première extrémité 12. Cette deuxième étape est réalisée après avoir laissé refroidir suffisamment le guide de lumière 4, afin que la température de sa face avant 6 soit inférieure à 80°C, de préférence inférieure à 60°C. Ainsi, on limite les risques de déformation ou de dégradation de la couche intercalaire. L'épaisseur de la couche intercalaire 22 est comprise dans la plage de valeurs mentionnée ci-dessus.

Lors d'une troisième et dernière étape, il est procédé au surmoulage de la couche intercalaire 22 pour former le premier cache 20 selon l'invention, par injection d'une matière plastique compatible avec celle utilisée pour former le guide de lumière 4. Par le terme « compatible », on entend l'utilisation d'une matière plastique formant une couche adhérente et étanche sur le guide de lumière. Plus précisément, la matière plastique est étalée contre la couche intercalaire 22 et une partie de la face avant 6 du guide de lumière 4 comme illustré par la figure 4, de manière à encapsuler le couche intercalaire 22 entre le guide de lumière 4 et le premier cache 20.

Ainsi, de façon avantageuse, la couche intercalaire 22 est protégée de l'environnement extérieur. Le dispositif d'éclairage 2C peut alors être utilisé comme un écran externe d'un feu de signalisation pour véhicule automobile. Le feu de signalisation présente alors une épaisseur bien moindre par rapport à l'état de la technique, car il n'est plus nécessaire de placer un écran de protection spécifique devant le dispositif d'éclairage pour le protéger de l'environnement extérieur.

## Revendications

1. Feu de signalisation (3) pour véhicule automobile comprenant un dispositif d'éclairage (2C, 2D, 2E, 2F) comprenant un guide de lumière (4) délimité par une face avant (6), une source de lumière (18) éclairant une première extrémité (12) du guide de lumière (4) ainsi qu'un premier cache (20) positionné devant la source de lumière (18) et une partie de la face avant (6) du guide de lumière, de sorte que le premier cache (20) dissimule la source de lumière (18) à un observateur regardant la face avant (6) du guide de lumière, la face avant (6) du guide de lumière, en vis-à-vis du premier cache (20), est au moins partiellement recouverte par une couche intercalaire (22) réfléchissant la lumière émise par la source de lumière (18), **caractérisé en ce que** la couche intercalaire (22) est en retrait de l'extrémité (24) du premier cache (20) qui recouvre la face avant (6) du guide de lumière (4).

2. Feu de signalisation (3) selon la revendication 1, **caractérisé en ce que** le guide de lumière (4) forme un écran externe du feu de signalisation.

3. Feu de signalisation (3) selon la revendication 1 ou 2, **caractérisé en ce que** le guide de lumière (4) forme au moins une concavité et/ou une convexité, de manière à former au niveau de sa face avant (6) une surface en trois dimensions.

4. Feu de signalisation (3) selon l'une des revendications précédentes, **caractérisé en ce que** le guide de lumière (4) comprend des moyens de diffraction (26) de la lumière se propageant dans le guide de lumière (4).

5. Feu de signalisation (3) selon la revendication précédente, **caractérisé en ce que** le premier cache (20) recouvre un ou plusieurs moyens de diffraction (26).

6. Feu de signalisation (3) selon la revendication 4 ou 5, **caractérisé en ce que** les moyens de diffraction (26) comprennent des cavités ménagées dans une face arrière (8) du guide de lumière (4), la face arrière (8) étant opposée à la face avant (6) du guide de lumière (4).

7. Feu de signalisation (3) selon l'une des revendications précédentes, **caractérisé en ce que** la couche intercalaire (22) est en contact avec le premier cache (20).

8. Feu de signalisation (3) selon l'une des revendications précédentes, **caractérisé en ce que** la couche intercalaire (22) recouvre l'extrémité de la face avant (6) du guide de lumière (4) ladite face avant étant ainsi dissimulée derrière le premier cache (20).

9. Feu de signalisation (3) selon la revendication précédente, **caractérisé en ce que** l'extrémité (24) du premier cache (20) est recourbée en direction de la face avant (6) du guide de lumière (4), de sorte à dissimuler complètement la couche intercalaire (22) à un observateur.

10. Feu de signalisation (3) selon l'une des revendications précédentes, **caractérisé en ce que** la couche intercalaire (22) recouvre entre 70% et 90% de la face avant (6) du guide de lumière (4), ladite face avant étant ainsi dissimulée derrière le premier cache (20).

11. Feu de signalisation (3) selon l'une des revendications précédentes, **caractérisé en ce que** l'épaisseur de la couche intercalaire (22) est inférieure à 5mm, de préférence inférieure à 1mm.

12. Feu de signalisation (3) selon l'une des revendications précédentes, **caractérisé en ce que** le guide de lumière (4) comporte au niveau d'une deuxième extrémité (14), une rainure accueillant un deuxième cache (21) de sorte que celui-ci affleure la face avant (6) du guide de lumière.

13. Véhicule automobile comprenant un feu de signalisation (3) selon l'une des revendications précédentes.

## Patentansprüche

1. Signallicht (3) für ein Kraftfahrzeug mit einer Beleuchtungsvorrichtung (2C, 2D, 2E, 2F), die einen durch eine Vorderseite (6) begrenzten Lichtleiter (4), eine ein erstes Ende (12) des Lichtleiters (4) beleuchtende Lichtquelle (18) und eine vor der Lichtquelle (18) und einem Teil der Vorderseite (6) des Lichtleiters angeordnete erste Abdeckung (20) aufweist, wobei die erste Abdeckung (20) die Lichtquelle (18) für einen die Vorderseite (6) des Lichtleiters betrachtenden Beobachter verdeckt, wobei die Vorderseite (6) des Lichtleiters gegenüber der ersten Abdeckung (20) mindestens teilweise mit einer Zwischenschicht (22) bedeckt ist, die das von der Lichtquelle (18) ausgesandte Licht reflektiert, **dadurch gekennzeichnet, daß** die Zwischenschicht (22) gegenüber dem Ende (24) der ersten Abdeckung (20), die die Vorderseite (6) des Lichtleiters (4) bedeckt, zurückgesetzt ist.

2. Signallicht (3) gemäß Anspruch 1, **dadurch gekennzeichnet, daß** der Lichtleiter (4) einen äußeren Schirm des Signallichts bildet.

3. Signallicht (3) gemäß Anspruch 1 oder 2, **dadurch gekennzeichnet, daß** der Lichtleiter (4) mindestens eine Einbuchtung und/oder eine Ausbuchtung bildet, um an seiner Vorderseite (6) eine dreidimensionale Oberfläche zu bilden.

4. Signallicht (3) gemäß einem der vorangehenden Ansprüche, **dadurch gekennzeichnet, daß** der Lichtleiter (4) Mittel (26) zum Brechen des sich im Lichtleiter (4) ausbreitenden Lichts aufweist.

5. Signallicht (3) gemäß dem vorangehenden Anspruch, **dadurch gekennzeichnet, daß** die erste Abdeckung (20) ein oder mehrere lichtbrechende Mittel (26) bedeckt.

6. Signallicht (3) gemäß Anspruch 4 oder 5, **dadurch gekennzeichnet, daß** die lichtbrechenden Mittel (26) in einer Rückseite (8) des Lichtleiters (4) ausgebildete Vertiefungen aufweist, wobei die Rückseite (8) von der Vorderseite (6) des Lichtleiters (4) abgewandt ist.

7. Signallicht (3) gemäß einem der vorangehenden Ansprüche, **dadurch gekennzeichnet, daß** die Zwischenschicht (22) mit der ersten Abdeckung (20) in Berührung kommt.

8. Signallicht (3) gemäß einem der vorangehenden Ansprüche, **dadurch gekennzeichnet, daß** die Zwischenschicht (22) das Ende der Vorderseite (6) des Lichtleiters (4) bedeckt, wobei die Vorderseite so hinter der ersten Abdeckung (20) verborgen ist.

9. Signallicht (3) gemäß dem vorangehenden Anspruch, **dadurch gekennzeichnet, daß** das Ende (24) der ersten Abdeckung (20) zur Vorderseite (6) des Lichtleiters (4) hin gekrümmt ist, um die Zwischenschicht (22) für einen Beobachter vollständig zu verbergen.

10. Signallicht (3) gemäß einem der vorangehenden Ansprüche, **dadurch gekennzeichnet, daß** die Zwischenschicht (22) zwischen 70 % und 90 % der Vorderseite (6) des Lichtleiters (4) bedeckt, wobei die Vorderseite so hinter der ersten Abdeckung (20) verborgen ist.

11. Signallicht (3) gemäß einem der vorangehenden Ansprüche, **dadurch gekennzeichnet, daß** die Dicke der Zwischenschicht (22) kleiner als 5 mm, vorzugsweise kleiner als 1 mm ist.

12. Signallicht (3) gemäß einem der vorangehenden Ansprüche, **dadurch gekennzeichnet, daß** der Lichtleiter (4) an einem zweiten Ende (14) eine Rille aufweist, die eine zweite Abdeckung (21) so aufnimmt, daß diese mit der Vorderseite (6) des Lichtleiters bündig ist.

13. Kraftfahrzeug mit einem Signallicht (3) gemäß einem der vorangehenden Ansprüche.

## Claims

1. Signalling light (3) for a motor vehicle comprising a lighting device (2C, 2D, 2E, 2F) comprising a light guide (4) delimited by a front face (6), a light source (18) lighting a first end (12) of the light guide (4) as well as a first mask (20) positioned in front of the light source (18) and a part of the front face (6) of the light guide, so that the first mask (20) hides the light source (18) to an observer looking at the front face (6) of the light guide, the front face (6) of the light guide, opposite the first mask (20), being at least partially covered by a interlayer (22) reflecting the light emitted by the light source (18), **characterized in that** the interlayer (22) is set back from the end (24) of the first mask (20) that covers the front face (6) of the light guide (4).

2. Signalling light (3) according to the claim 1, **characterized in that** the light guide (4) forms an outer screen of the signalling light.

3. Signalling light (3) according to the claim 1 or 2, **characterized in that** the light guide (4) forms at least one concavity and/or one convexity, so as to form at its front face a three-dimensional surface.

4. Signalling light (3) according to one of the previous claims, **characterized in that** the light guide (4) comprises means (26) for diffracting the light propagating in the light guide (4).

5. Signalling light (3) according to previous claim, **characterized in that** the first mask (20) covers one or several diffraction means (26).

6. Signalling light (3) according to the claim 4 or 5, **characterized in that** the diffraction means (26) comprise cavities provided in a rear face (8) of the light guide (4), the rear face (8) being opposed to the front face (6) of the light guide (4).

7. Signalling light (3) according to one of the previous claims, **characterized in that** the interlayer (22) is in contact with the first mask (20).

8. Signalling light (3) according to one of the previous claims, **characterized in that** the interlayer (22) covers the end of the front face (6) of the light guide (4), the front face (6) being hidden behind the first mask (20).

9. Signalling light (3) according to previous claim, **characterized in that** the end (24) of the first mask (20) is curved towards the front face (6) of the light guide (4), so as to fully hide the interlayer (22) to an observer.

10. Signalling light (3) according to one of the previous claims, **characterized in that** the interlayer (22) covers between 70 % and 90 %, of the front face (6) of the light guide (4), the front face (6) being hidden behind the first mask (20).

11. Signalling light (3) according to one of the previous claims, **characterized in that** the thickness of the interlayer (22) is lower than 5 mm, preferably lower than 1 mm.

12. Signalling light (3) according to one of the previous claims, **characterized in that** the light guide (4) includes, at a second end (14), a groove receiving a second mask (21) so that the latter flushes with the front face (6) of the light guide.

13. A motor vehicle comprising a signalling light (3) according to one of the preceding claims.
